# FASCICULE DE BREVET EUROPEEN

(11) **EP 2 688 167 B1**
(45) Date de publication et mention de la délivrance du brevet: **18.02.2015**
(21) Numéro de dépôt: 12305880.2
(22) Date de dépôt: 19.07.2012
(51) Int. Cl.: H02G 3/04, H02G 3/06

(54) **Goulotte pour chemin de câbles et chemin de câbles comprenant une telle goulotte**
Rinne für Kabelkanal, und Kabelkanal, der eine solche Rinne umfasst
Chute for cable tray and cable tray including such a chute

(43) Date de publication de la demande: 22.01.2014
(73) Titulaire: Gewiss France SAS, 21430 Liernais (FR)
(72) Inventeur: LEGUY, Claude, 21430 MARCHESEUIL (FR)
(74) Mandataire: Myon, Gérard Jean-Pierre

(56) Documents cités:
- EP-A1- 1 511 142
- DE-C1- 19 831 145

## Description

L'invention a trait à une goulotte pour chemin de câbles en treillis de fils soudés, ainsi qu'à un chemin de câbles comprenant au moins deux telles goulottes.

Dans le domaine des chemins de câbles, il est connu de réaliser une goulotte en soudant des fils métalliques longitudinaux et des fils métalliques transversaux. Lorsqu'il convient de maintenir bout-à-bout de telles goulottes, il est connu, par exemple de FR-A-2 687 207 d'utiliser une éclisse obtenue par découpage et pliage d'un flan de tôle. Une telle éclisse ne peut être mise en place sur les extrémités adjacentes de deux goulottes que lorsque celles-ci sont en position et sensiblement alignées, ce qui impose de transporter les éclisses à part sur un chantier, en quantité suffisante pour équiper l'ensemble des goulottes constitutives d'un chemin de câbles. Ceci impose une gestion de stock adaptée et induit un risque de perte.

Il est par ailleurs connu de EP-A-0 973 238 de conformer l'une au moins des extrémités d'une goulotte de chemin de câbles pour lui permettre d'accommoder l'autre extrémité d'une goulotte identique, en disposant des fils transversaux de façon rapprochée dans l'une des extrémités, afin de former une fente de réception d'un fil transversal de l'extrémité opposée d'une autre goulotte. Une telle approche est délicate à mettre en oeuvre dans la mesure où l'immobilisation relative de deux extrémités de deux goulottes adjacentes engagées l'une dans l'autre repose sur le diamètre des fils transversaux et la largeur d'une fente qui peuvent varier, compte tenu des tolérances de fabrication de ces matériels. Ainsi, l'éclissage de deux goulottes mises bout-à-bout ne peut pas être garanti, notamment lorsque ces goulottes doivent supporter un poids relativement important dans le cas de câbles électriques de fort diamètre disposés dans le chemin de câbles. Les documents EP-A-1511142 et DE-C-19831 145 proposent d'autres solutions.

C'est à ces inconvénients qu'entend plus particulièrement remédier l'invention en proposant une nouvelle goulotte qui est aisée à mettre en oeuvre et qui permet un éclissage efficace avec une goulotte identique.

A cet effet, l'invention concerne une goulotte pour chemin de câbles comprenant des fils longitudinaux et des fils transversaux soudés en un treillis qui définit un fond de la goulotte ainsi que deux côtés s'étendant de part et d'autre de ce fond, cette goulotte étant pourvue, le long d'un axe longitudinal de la goulotte, d'une première extrémité et d'une deuxième extrémité telles que la première extrémité peut être engagée et reçue dans la deuxième extrémité d'une goulotte identique. Cette goulotte est **caractérisée en ce que** la première extrémité porte, sur l'extérieur de chacun de ses côtés, au moins un barreau allongé dont un axe longitudinal est parallèle à l'axe longitudinal de la goulotte.

Grâce à l'invention, chaque barreau allongé constitue un verrou qui garantit un éclissage efficace de la première extrémité de la goulotte dans la deuxième extrémité d'une goulotte identique. Un tel barreau interagit avec un fil longitudinal de la deuxième extrémité de la deuxième goulotte, contre lequel il peut venir en appui sur toute sa longueur, ce qui assure un verrouillage efficace de la première extrémité de la goulotte en position dans la deuxième extrémité de la goulotte identique.

Selon les aspects avantageux mais non obligatoires de l'invention, une telle goulotte peut incorporer une ou plusieurs des caractéristiques suivantes, prises en toute combinaison techniquement admissible :
- Le ou chaque barreau est soudé sur deux fils transversaux adjacents de la première extrémité, au niveau d'une portion de ces fils constituant un côté de cette première extrémité.
- Une première distance axiale, définie entre les deux fils transversaux sur lesquels est soudé le barreau, est inférieure à une deuxième distance axiale, définie entre deux fils transversaux appartenant à la deuxième extrémité.
- La longueur du barreau est supérieure à la première distance axiale et inférieure à la deuxième distance axiale.
- Le barreau est disposé, par rapport à une barre de fond d'un fil transversal de la première extrémité sur lequel le barreau est soudé, à une première distance, définie perpendiculairement au fond de la première extrémité, telle que lorsque la première extrémité est reçue dans la deuxième extrémité d'une goulotte identique avec ses deux fils transversaux adjacents en appui sur au moins un fil longitudinal du fond de la deuxième extrémité, le barreau est en appui contre un fil longitudinal de côté de la deuxième extrémité.
- La première distance est égale ou supérieure de moins de 5%, de préférence moins de 3%, à une deuxième distance définie entre le fil longitudinal de côté de la deuxième extrémité et un fil longitudinal de fond de cette deuxième extrémité.
- La première distance est définie entre des parties opposées du barreau et de la barre de fond du fil transversal de la première extrémité, alors que la deuxième distance est définie entre des parties en regard du fil longitudinal de côté et du fil longitudinal de fond de la deuxième extrémité.
- Le barreau et les fils longitudinaux sont à section circulaire, alors qu'une troisième distance, mesurée perpendiculairement à l'axe longitudinal du barreau, entre cet axe longitudinal et un plan médian entre les côtés de la première extrémité, est supérieure à une quatrième distance mesurée perpendiculairement à un axe longitudinal d'un fil longitudinal de côté de la deuxième extrémité, entre cet axe longitudinal et le plan médian précité.
- La première distance est définie entre des parties opposées du barreau et de la barre de fond du fil transversal de la première extrémité et en ce que la deuxième distance est définie entre des parties en regard du fil longitudinal de côté et du fil longitudinal de fond de la deuxième extrémité.
- Les fils transversaux sont disposés au-dessus de parties des fils longitudinaux formant le fond de la goulotte et à l'intérieur de parties de fils longitudinaux formant les côtés de la goulotte, sauf au niveau de la première extrémité où les fils transversaux sont situés au-dessous de parties des fils longitudinaux formant le fond de la première extrémité et à l'extérieur des partie des fils longitudinaux formant les côtés de la première extrémité.

L'invention concerne également un chemin de câbles qui comprend au moins une première goulotte et une deuxième goulotte telles que mentionnées ci-dessus, éclissées ensemble par la réception de la première extrémité de la première goulotte dans la deuxième extrémité de la deuxième goulotte avec le ou chaque barreau de la première extrémité de la première goulotte en appui contre un fil longitudinal de côté de la deuxième extrémité de la deuxième goulotte.

L'invention sera mieux comprise et d'autres avantages de celle-ci apparaîtront plus clairement à la lumière de la description qui va suivre de deux modes de réalisation de goulottes et d'un chemin de câbles conforme à son principe, donnée uniquement à titre d'exemple et faite en référence aux dessins annexés dans lesquels :
- la figure 1 est une vue en perspective d'une goulotte conforme à un premier mode de réalisation de l'invention ;
- la figure 2 est une vue en perspective, à plus petite échelle, d'un chemin de câbles réalisé par l'assemblage de deux goulottes identiques à celle de la figure 1 ;
- la figure 3 est une vue partielle de côté, dans la zone de jonction entre les goulottes du chemin de câbles de la figure 2 ;
- la figure 4 est une coupe selon la ligne IV-IV à la figure 3 ;
- la figure 5 est une vue à plus grande échelle de détail V à la figure 4 ;
- la figure 6 est une coupe comparable à la figure 4, mais à plus petite échelle, lors de l'assemblage du chemin de câbles de la figure 2, et
- la figure 7 est une vue en perspectives analogue à la figure 2, pour un chemin de câbles conforme à un deuxième mode de réalisation de l'invention.

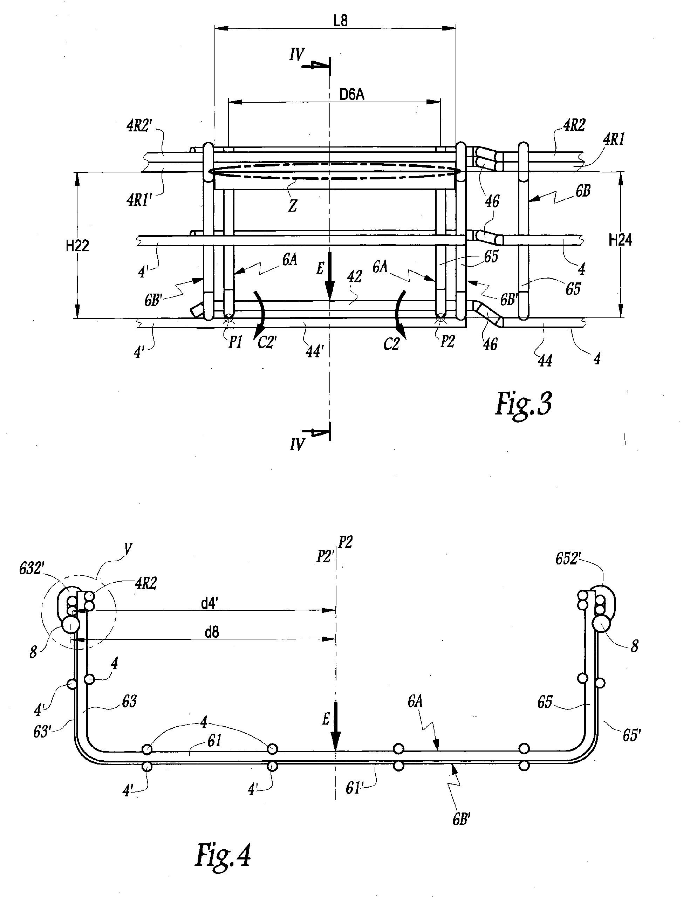

Pour la clarté du dessin, les fils coupés sur les figures 4 à 6 ne sont pas hachurés.

La goulotte 2 représentée sur les figures est réalisée par soudage de fils longitudinaux 4 avec des fils transversaux 6. Les fils 4 et 6 sont métalliques, par exemple en acier, et à section circulaire. En variante, ces fils peuvent être réalisés en matière synthétique, notamment en PVC ou polyéthylène.

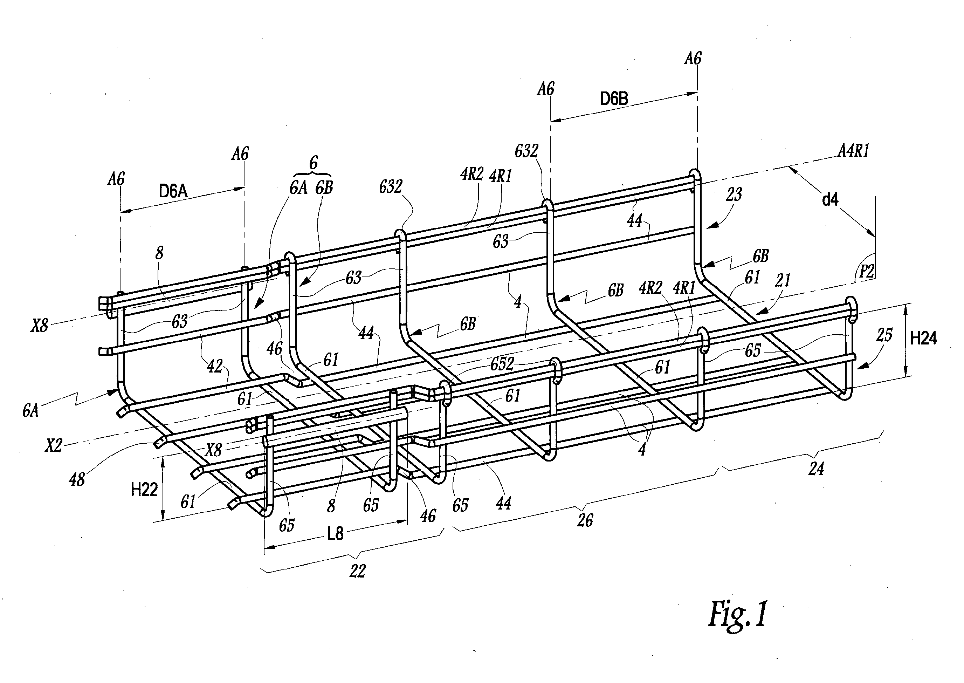

La goulotte 2 s'étend, selon un axe longitudinal X2, entre une première extrémité 22 représentée sur la gauche de la figure 1 et une deuxième extrémité 24 représentée sur la droite de cette figure.

Les fils longitudinaux 4, qui sont parfois qualifiés de « fils de chaîne » s'étendent globalement chacun selon une direction parallèle à l'axe X2. Les fils longitudinaux 4 sont rectilignes sur une portion centrale 26 de la goulotte 2 définie entre les extrémités 22 et 24 et au niveau de l'extrémité 24. On note 42 une partie rectiligne d'un fil longitudinal 4 située au niveau de l'extrémité 22. On note 44 la partie rectiligne d'un fil longitudinal 4 qui est situé au niveau des portions 24 et 26 de la goulotte 2. Les parties 42 et 44 sont reliées par une portion à double courbure 46 pour chaque fil longitudinal.

Les fils transversaux 6, qui sont parfois qualifiés de « fils de trame », sont de deux types. Deux fils transversaux 6A d'un premier type sont utilisés au niveau de la première extrémité 22. Des fils transversaux 6B d'un deuxième type sont utilisés au niveau de la portion centrale 26 et de la deuxième extrémité 24. Ils sont au nombre de 4 dans l'exemple des figures 1 à 6. Ce nombre peut varier en fonction de la longueur de la goulotte 2.

Chaque fil transversal 6A ou 6B est conformé en U à fond plat et comprend une barre centrale 61 et deux branches 63 et 65 perpendiculaires à cette barre centrale.

Le fond 21 de la goulotte 2 est défini par les barres centrales 61 des fils transversaux 6 et par les fils longitudinaux 4 qui sont soudés sur ces barres centrales. Les côtés 23 et 25 de la goulotte 2 sont définis par les branches 63 et 64 des fils transversaux 6 et par les fils longitudinaux 4 qui sont soudés sur ces branches.

On nomme « fil de rive » les fils longitudinaux qui délimitent le bord supérieur des côtés 23 et 25, à l'opposé du fond 21. Dans l'exemple, deux fils de rive adjacents 4R1, 4R2 sont utilisés, en partie haute de chaque côté 23 ou 25, le fil de rive 4R1 étant le plus proche du fond 21. Les fils de rive sont identiques aux autres fils longitudinaux 4. En variante, un seul fil de rive peut être utilisé.

Conformément à l'enseignement technique de FR-A-2 686 373, les extrémités libres 632 et 652 des branches 63 et 65 des fils transversaux 6B sont recourbées vers l'extérieur pour entourer les fils de rive 4R1 et 4R2 au niveau de la deuxième extrémité 24 et de la portion centrale 26 de la goulotte 2. Ceci n'est pas le cas au niveau de la première extrémité 22.

La deuxième extrémité 24 est définie, le long de l'axe X₂, entre les deux fils transversaux 6B les pus éloignés de la première extrémité 22.

On note P2 un plan de la goulotte 2 parallèle à l'axe X2, perpendiculaire au fond 21 et médian entre les côtés 23 et 25.

Au niveau des portions 24 et 26 de la goulotte 2, les fils longitudinaux 4 sont soudés sur l'extérieur des fils transversaux 6B à la fois pour constituer le fond 21 et les côtés 23 et 25 de la goulotte 2. Au niveau de l'extrémité 22, les fils longitudinaux 4 sont soudés sur l'intérieur des deux fils transversaux 6A appartenant à l'extrémité 22. Les portions courbes 46 des fils longitudinaux 4 permettent de faire passer ces fils longitudinaux de l'extérieur des fils transversaux 6B à l'intérieur des fils transversaux 6A. Ainsi, au niveau de l'extrémité 22, le fond 21 est plus haut que dans les portions 24 et 26. De même, au niveau de l'extrémité 22, les côtes 23 et 25' sont plus proches que dans les portions 24 et 26. L'extrémité 22 est donc moins haute et moins large que les portions 24 et 26.

Les barres centrales 61 des fils transversaux 6B des portions 24 et 26 sont légèrement plus longues que les barres centrales 61 des fils transversaux 6A de la première extrémité 22. La différence de longueur entre ces barres 61 est d'environ deux fois la profondeur de pénétration des fils 4 au niveau des branches 63 et 65 des fils 6A et 6B. En d'autres termes, en prenant l'hypothèse que les fils longitudinaux et transversaux pénètrent les uns dans les autres sur 1 mm au niveau d'une soudure, les barres centrales 61 des fils transversaux 6B sont plus longues de 2 mm que les barres centrales 61 des fils transversaux 6A, ce que montre la figure 4.

L'extrémité 22 s'étend, le long de l'axe X₂, entre les deux fils transversaux 6A et jusqu'au niveau des portions à courbure 46 des fils longitudinaux 4. A l'opposé de la portion centrale 26, chaque fil longitudinal 4 est pourvu d'une extrémité 48 qui est recourbée en sens opposé à sa portion 46.

On note D6A la distance axiale, c'est-à-dire mesurée parallèlement à l'axe X2, entre les deux fils transversaux 6A appartenant à l'extrémité 22. Cette distance est mesurée entre les axes longitudinaux respectifs A6 des fils transversaux 6A de l'extrémité 24. De la même façon, on note D6B la distance axiale entre les axes longitudinaux respectifs de deux fils transversaux 6B. La distance D6B est supérieure à la distance D6A de plus de deux fois le diamètre des fils transversaux.

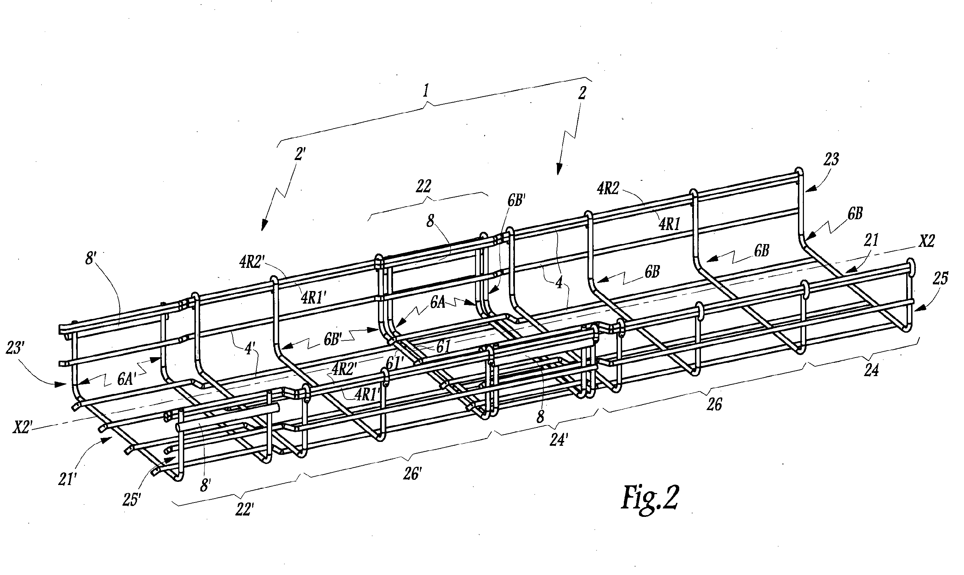

La géométrie de l'extrémité 22 de la goulotte 2 permet de l'engager et de l'immobiliser dans la deuxième extrémité d'une goulotte identique, comme représenté aux figures 2 à 5, afin de former un chemin de câbles 1. Sur ces figures, la goulotte 2 est associée à une goulotte 2' qui est identique et pour laquelle les éléments analogues à ceux de la goulotte 2 porte les mêmes références avec le signe « prime ». La goulotte 2' comprend ainsi une première extrémité 22', une deuxième extrémité 24' et une portion centrale 26' ménagée entre ces deux extrémités. La goulotte 2' est constituée de fils longitudinaux ou fils de chaîne 4' et de fils transversaux ou de fils de trame 6' qui sont de deux types 6A' et 6B'.

Compte tenu de la relation entre les distances D6A et D6B, il est possible, lorsqu'on forme le chemin de câbles 1 représenté aux figures 2 à 5, de disposer les fils transversaux 6A de l'extrémité 22 de la goulotte 2 entre les fils transversaux 6B' de l'extrémité 24' de la goulotte 2', le long de l'axe longitudinal X1 du chemin de câbles 1, lequel est alors confondu avec les axes longitudinaux respectifs X2 et X2' des goulottes 2 et 2'. On remarque à la figure 2 que les extrémités recourbées 48 et fils longitudinaux 4 viennent en appui contre le fil transversal 6B' de l'extrémité 24' de la goulotte 2' qui est le plus près de la portion intermédiaire 26' de cette goulotte.

Pour assurer un verrouillage ou éclissage efficace de la première extrémité 22 de la goulotte 2 dans la deuxième extrémité 24' de la goulotte 2', un barreau 8 formant verrou est prévu sur chacun des côtés 23 et 25, au niveau de l'extrémité 22.

Ce verrou est formé par un barreau cylindrique, à section circulaire comme les fils 4 et 6, mais présentant un diamètre Φ8 de valeur supérieure au diamètre Φ4 des fils longitudinaux. Le diamètre Φ8 est compris entre 1,75 et 3 fois le diamètre Φ4, de préférence égal à 1,8 fois ce diamètre.

On note A8 l'axe longitudinal d'un barreau 8. Cet axe est parallèle à l'axe X2, donc aux fils longitudinaux dans leur partie 42 qui se trouve au niveau de la première extrémité 22.

Au niveau du côté 23, le barreau 8 est soudé sur l'extérieur des branches 63 et des fils transversaux 6A. Au niveau du côté 25, le barreau 8 est soudé sur l'extérieur des branches 65 des fils transversaux 6A. Ainsi, les barreaux 8 sont soudés, sur les branches 63 et 65 des fils transversaux 6A, à l'opposé des fils longitudinaux 4.

On note H22 la hauteur, mesurée perpendiculairement au fond 21, entre le barreau 8 et les barres centrales 61 des fils transversaux 6A. Plus précisément, cette hauteur est mesurée entre les parties opposées d'un barreau 8 et d'une barre 61, c'est-à-dire entre le bord supérieur du barreau 8, opposé au fond 21, et le bord inférieur d'une barre 61.

On note par ailleurs H24 la hauteur, mesurée perpendiculairement au fond 21, entre le fil de rive 4R1 et un fil longitudinal 4 appartenant au fond 21. Plus précisément, la hauteur H24 est mesurée entre les parties en regard du fil de rive 4R1 et du fil longitudinal de fond 4 précité, à savoir le bord inférieur de ce fil de rive et le bord supérieur de ce fil longitudinal de fond.

Les hauteurs H22 et H24 sont mesurées parallèlement au plan P2.

Par construction, la hauteur H22 est choisie égale ou légèrement supérieure à la hauteur H24. Par légèrement supérieure, on entend que la hauteur H22 est supérieure de moins de 5%, de préférence moins de 3%, par rapport à la hauteur H24.

On note L8 la longueur d'un barreau 8 mesurée parallèlement à l'axe X2. La longueur L8 est supérieure à la distance D6A, ce qui permet de souder ce barreau sur les branches 63 ou 65 des fils transversaux 6A. Cette longueur est inférieure à la distance D6B, ce qui permet de loger le barreau entre les fils transversaux 6B' de l'extrémité 24'.

Le fait que la distance D6A a une valeur inférieure à la distance D6B permet également d'engager les fils 6A de l'extrémité 22 entre les fils 6B' de l'extrémité 24'.

Ainsi, lorsque l'extrémité 22 de la goulotte 2 est reçue dans l'extrémité 24' de la goulotte 2', les barres centrales 61 des fils transversaux 6A viennent en appui sur le dessus des fils longitudinaux 4' de la goulotte 2', au niveau de sa deuxième extrémité 24', alors que chaque barreau 8 vient en appui sous le fil de rive 4R1' de la goulotte 2' le plus proche de son fond 21'. Compte tenu des valeurs respectives des hauteurs H22 et H24, l'extrémité 22 peut exercer, entre deux des fils 4' de l'extrémité 24' et grâce aux éléments 8 et 61, un effort de dilatation selon une direction perpendiculaire au fond 21' de la goulotte 2' qui coince l'extrémité 22 dans l'extrémité 24'.

Comme cela ressort plus particulièrement de la figure 3, la transmission d'effort entre les goulottes 2 et 2' a lieu, d'une part, au niveau deux points P1 et P2 définis à l'interface entre les barres 61 des fils 6A de l'extrémité 22 et les fils 4' du fond 21' de l'extrémité 24' et, d'autre part, dans une zone Z de contact entre chaque barreau 8 et le fil de rive 4R1' adjacent, au niveau de l'extrémité 24'.

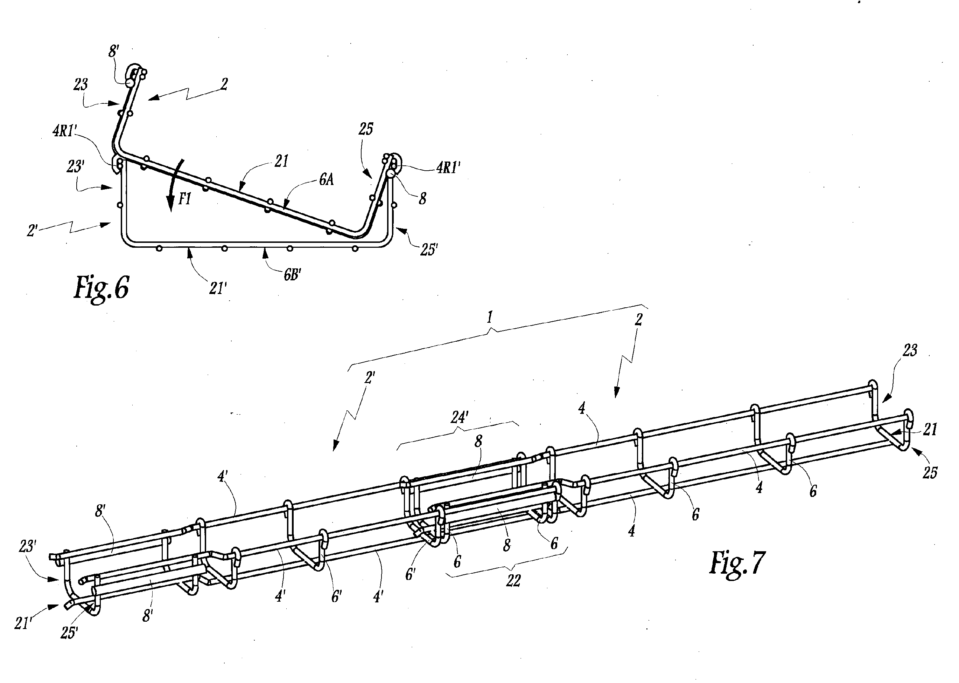

La mise en place de l'extrémité 22 dans l'extrémité 24' est représentée à la figure 6. Il suffit d'engager le barreau 8 d'un côté, par exemple le côté 25, de la goulotte 2 sous le fil de rive 4R1' du côté 25'de la goulotte 2', puis de faire pivoter la goulotte 2 dans le sens de la flèche F1 à la figure 6, c'est-à-dire en rapprochant le fond 21 du fond 21' par une rotation autour de la ligne de contact entre le fil de chaîne 4R1' et le barreau 8 mentionnés ci-dessus, pour encliqueter le barreau 8 de l'autre côté, 23 dans l'exemple, sous le fil de rive 4R1' du côté 23' de la goulotte 2'. Ainsi, l'assemblage entre les deux goulottes 2 et 2', pour constituer le chemin de câbles 1, est particulièrement simple et intuitif pour un opérateur.

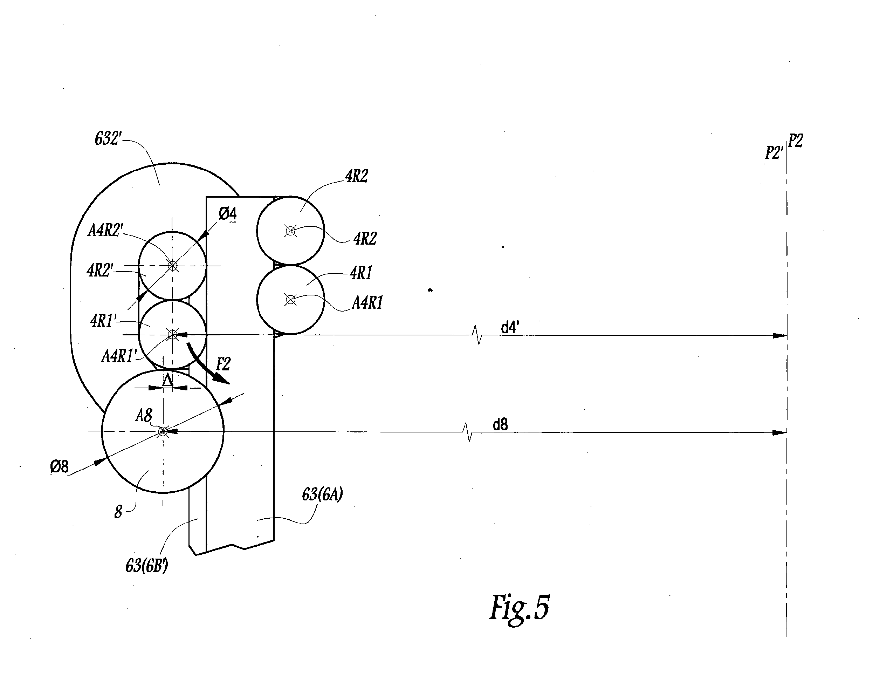

Selon un aspect avantageux de l'invention, plus particulièrement visible à la figure 5, le chemin de câbles ainsi constitué est auto-serrant.

On note d8 la distance, mesurée perpendiculairement aux axes X2 et A8, entre le plan P2 et l'axe A8.

On note A4R1 l'axe longitudinal de la partie 44 du fil longitudinal de rive 4R1 le plus proche du fond 21. On note d4 la distance, mesurée perpendiculairement aux axes X2 et A4R1 entre le plan P2 et l'axe A4R1. De la même façon, on note A4R1' l'axe longitudinal de la partie, correspondant aux portions 24' et 26', du fil de chaîne de rive inférieur 4R1' de la goulotte 2' et d4' la distance correspondante pour cette goulotte mesurée par rapport à un plan P2' de la goulotte 2' médian entre ses côtes 23' et 25'. Les distances d4 et d4' sont égales.

La distance d8 a une valeur supérieure à la valeur de la distance d4. Lorsque l'extrémité 22 est reçue dans l'extrémité 24', comme représenté aux figures 4 et 5, comme la distance d8 est supérieure à la distance d4', un décalage axial Δ existe entre les axes A8 et A4R1', l'axe A8 étant plus éloigné du plan P2 que l'axe A4R1' n'est éloigné du plan P2', alors que ces plans sont confondus en configuration assemblée du chemin de câbles 1.

On considère le cas où un effort E est exercé sur les fonds 21 et 21' des goulottes 2 et 2' dans la zone où l'extrémité 22 est reçue dans l'extrémité 24, cet effort E étant vertical et dirigé vers le bas, donc de nature à exercer un couple de pivotement des goulottes 2 et 2' dans le sens des flèches C2 et C2' à la figure 3. Ce couple a pour effet de tirer les fils de rive 4R1' et 4R2' vers les barreaux 8 et le décalage Δ a pour effet de guider le fil de rive 4R1' vers les plans P2 et P2', en glissant sur le dessus du barreau 8, dans le sens de la flèche F2 à la figure 5. Le fil A4R1' est déplacé dans un sens tel qu'il vient fermement en appui contre les branches adjacentes 63 des fils transversaux 6A. En d'autres termes, plus l'effort E est important, plus l'effort de coincement des fils de rive 4R1' contre les fils transversaux 6A est important, donc plus le verrouillage est efficace.

L'efficacité du verrouillage est également augmenté par le fait qu'un barreau 8 est prévu sur chacun des côtés 23 et 25 de la goulotte 2.

Comme il ressort de la figure 2, la goulotte 2' qui est identique à la goulotte 2 est également pourvue de barreaux ou verrous 8' identique aux barreaux ou verrous 8 de la goulotte 2.

En variante, les barreaux 8 de la goulotte 2 peuvent être prévus pour venir en appui contre le fil longitudinal intermédiaire d'un des côtés 23' ou 25' d'une goulotte identique 2'. En d'autres termes, il n'est pas obligatoire que le barreau coopère avec un fil de rive d'une goulotte identique.

Selon une autre variante, deux barreaux 8 peuvent être prévus sur chaque côté 23 et 25, au niveau de l'extrémité 22. Ces barreaux peuvent alors coopérer simultanément avec un fil de rive et un fil intermédiaire des côtés 23' et 25' de l'extrémité 24' d'une autre goulotte 2'.

La mise à la longueur d'une goulotte 2 en fonction de la longueur prévue pour un chemin de câbles 1 est aisée puisqu'il suffit de la sectionner dans l'une de ses parties 24 ou 26, au voisinage d'un fil transversal 6 autre que le fil transversal 6B le plus proche des portions à courbure 46 des fils longitudinaux 4. En effet, pour autant qu'il demeure deux fils transversaux 6B sur la goulotte 2, il est possible de l'éclisser avec une goulotte identique dont la première extrémité est engagée entre ces deux fils transversaux.

Dans le deuxième mode de réalisation de l'invention représentée à la figure 7, les éléments analogues à celui du premier mode de réalisation portent les mêmes références. Comme ce mode de réalisation est proche du premier, on ne décrit ci-après que ce qui le distingue du précédent. Dans ce mode de réalisation, le fond 21 de la goulotte 2 comprend un seul fil longitudinal 4 et les côtés 23 et 25 sont définis par un seul fil de rive longitudinal 4. L'extrémité 22 de la goulotte 2 comporte deux barreaux 8 qui coopèrent avec les fils de rive 4' des côtés 23' et 25' d'une goulotte identique 2'.

L'invention est représentée sur les figures dans le cas où la première extrémité 22 est de largeur et de hauteur réduites par rapport à la portion centrale 26. En variante, la première extrémité peut avoir les mêmes dimensions transversales que la portion centrale 26. La deuxième extrémité 24 est alors élargie et agrandie en hauteur par rapport à la portion centrale 26, pour pouvoir accommoder la première extrémité 22.

## Revendications

1. Goulotte (2) pour chemin de câbles (1) comprenant des fils longitudinaux (4) et des fils transversaux (6, 6A, 6B) soudés en un treillis qui définit un fond (21) de la goulotte ainsi que deux côtés (23, 25) s'étendant de part et d'autre de ce fond, cette goulotte étant pourvue, le long d'un axe longitudinal (X2) de la goulotte (2), d'une première extrémité (22) et d'une deuxième extrémité (24) telles que la première extrémité peut être engagée et reçue dans la deuxième extrémité (24') d'une goulotte identique (2'), **caractérisée en ce que** la première extrémité (22) porte, sur l'extérieur de chacun de ses côtés (23, 25), au moins un barreau (8) allongé dont un axe longitudinal (A8) est parallèle à l'axe longitudinal (X2) de la goulotte.

2. Goulotte selon la revendication 1, **caractérisée en ce que** le ou chaque barreau (8) est soudé sur deux fils transversaux adjacents (6A) de la première extrémité (22), au niveau d'une portion (63, 65) de ces fils constituant un côté (23, 25) de cette première extrémité.

3. Goulotte selon la revendication 2, **caractérisée en ce qu'**une première distance axiale (D6A) entre les deux fils transversaux (6A) sur lesquels est soudé le barreau (8) est inférieure à une deuxième distance axiale (D6B) entre deux fils transversaux (6B) appartenant à la deuxième extrémité (24).

4. Goulotte selon la revendication 3, **caractérisée en ce que** la longueur (L8) du barreau (8) est supérieure à la première distance axiale (D6A) et inférieure à la deuxième distance axiale (D6B).

5. Goulotte selon l'une des revendications 2 à 4, **caractérisée en ce que** le barreau (8) est disposé, par rapport à une barre de fond (61) d'un fil transversal (6a) de la première extrémité (22) sur lequel le barreau est soudé, à une première distance (H22), définie perpendiculairement au fond (21) de la première extrémité, telle que, lorsque la première extrémité (22) est reçue dans la deuxième extrémité (24') d'une goulotte identique (2') avec ses deux fils transversaux adjacents (6A) en appui sur au moins un fil longitudinal (4') du fond de la deuxième extrémité, le barreau (8) est en appui contre un fil longitudinal (4R1') de côté de la deuxième extrémité.

6. Goulotte selon la revendication 5, **caractérisée en ce que** la première distance (H22) est égale ou supérieure de moins de 5%, de préférence moins de 3%, à une deuxième distance (H24) définie entre le fil longitudinal de côté (4R1) de la deuxième extrémité (24) et un fil longitudinal de fond (4) de la deuxième extrémité (24).

7. Goulotte selon la revendication 6, **caractérisée en ce que** la première distance (H22) est définie entre des parties opposées du barreau (8) et de la barre (61) de fond du fil transversal (6A) de la première extrémité (22) et **en ce que** la deuxième distance (H24) est définie entre des parties en regard du fil longitudinal de côté (4R1) et du fil longitudinal de fond (4) de la deuxième extrémité (24).

8. Goulotte selon l'une des revendications précédentes ,**caractérisée en ce que** le barreau (8) et les fils longitudinaux (4) sont à section circulaire et **en ce qu'**une troisième (d8) distance mesurée perpendiculairement à l'axe longitudinal (A8) du barreau, entre cet axe longitudinal et un plan (P2) médian entre les côtés (21, 23) de la première extrémité (22), est supérieure à une quatrième distance (d4) mesurée perpendiculairement à un axe longitudinal (A4R1) d'un fil longitudinal (4R1) de côté de la deuxième extrémité (24), entre cet axe longitudinal et ce plan médian.

9. Goulotte selon l'une des revendications précédentes, **caractérisée en ce que** les fils transversaux (6) sont disposés au-dessus de parties (44) des fils longitudinaux formant le fond (21) de la goulotte (2) et à l'intérieur de parties (44) des fils longitudinaux formant les côtés (23, 25) de la goulotte, sauf au niveau de la première extrémité (22) où les fils transversaux sont situés au-dessous des parties (42) des fils longitudinaux formant le fond (21) de la première extrémité et à l'extérieur de parties (42) des fils longitudinaux formant les côtés (23, 25) de la première extrémité.

10. Chemin des câbles (1) comprenant au moins une première goulotte (2) et une deuxième goulotte (2') selon l'une des revendications précédentes, éclissées ensemble par la réception de la première extrémité (22) de la première goulotte dans la deuxième extrémité (24') de la deuxième goulotte, avec le ou chaque barreau (8) de la première extrémité (22) de la première goulotte (2) en appui contre un fil longitudinal (4R1') de côté de la deuxième extrémité (24') de la deuxième goulotte (2').

## Patentansprüche

1. Rinne (2) für einen Kabelkanal (1), die Längsdrähte (4) und Querdrähte (6, 6A, 6B) umfasst, die zu einem Gitterwerk zusammengeschweißt sind, das einen Boden (21) der Rinne sowie zwei Seiten (23, 25), die sich beidseitig dieses Bodens erstrecken, begrenzt, wobei diese Rinne entlang einer Längsachse (X2) der Rinne (2) mit einem ersten Ende (22) und einem zweiten Ende (24) versehen ist, derart, dass das erste Ende von dem zweiten Ende (24') einer identischen Rinne (2') aufgenommen werden kann und in diese eingreifen kann, **dadurch gekennzeichnet, dass** das erste Ende (22) außen an jeder seiner Seiten (23, 25) mindestens einen langgestreckten Stab (8) trägt, dessen Längsachse (A8) parallel zur Längsachse (X2) der Rinne liegt.

2. Rinne nach Anspruch 1, **dadurch gekennzeichnet, dass** der oder jeder Stab (8) mit zwei benachbarten Querdrähten (6A) des ersten Endes (22) an einem Bereich (63, 65) dieser Drähte, der eine Seite (23, 25) dieses ersten Endes bildet, geschweißt ist.

3. Rinne nach Anspruch 2, **dadurch gekennzeichnet, dass** eine erste axiale Entfernung (D6A) zwischen den zwei Querdrähten (6A), auf die der Stab (8) geschweißt ist, kleiner ist als eine zweite axiale Entfernung (D6B) zwischen zwei Querdrähten (6B), die zu dem zweiten Ende (24) gehören.

4. Rinne nach Anspruch 3, **dadurch gekennzeichnet, dass** die Länge (L8) des Stabes (8) größer ist als die erste axiale Entfernung (D6A) und kleiner ist als die zweite axiale Entfernung (D6B).

5. Rinne nach einem der Ansprüche 2 bis 4, **dadurch gekennzeichnet, dass** der Stab (8) in Bezug auf einen Bodenholm (61) eines Querdrahtes (6A) des ersten Endes (22), an den der Stab geschweißt ist, in einer ersten Entfernung (H22), die senkrecht zum Boden (21) des ersten Endes definiert ist, angeordnet ist, derart, dass, wenn das erste Ende (22) in dem zweiten Ende (24') einer identischen Rinne (2') mit seinen zwei benachbarten Querdrähten (6A) in Abstützung auf mindestens einem Längsdraht (4') des Bodens des zweiten Endes aufgenommen ist, der Stab (8) sich gegen einen Seitenlängsdraht (4R1') des zweiten Endes abstützt.

6. Rinne nach Anspruch 5, **dadurch gekennzeichnet, dass** die erste Entfernung (H22) gleich einer zweiten Entfernung (H24) oder um weniger als 5 %, vorzugsweise weniger als 3 %, größer als die zweite Entfernung ist, die zwischen dem Seitenlängsdraht (4R1) des zweiten Endes (24) und einem Bodenlängsdraht (4) des zweiten Endes (24) definiert ist.

7. Rinne nach Anspruch 6, **dadurch gekennzeichnet, dass** die erste Entfernung (H22) zwischen entgegengesetzten Teilen des Stabes (8) und des Bodenholms (61) des Querdrahtes (6A) des ersten Endes (22) definiert ist und dass die zweite Entfernung (H24) zwischen den gegenüberliegenden Teilen des Seitenlängsdrahts (4R1) und des Bodenlängsdrahts (4) des zweiten Endes (24) definiert ist.

8. Rinne nach einem der vorhergehenden Ansprüche, **dadurch gekennzeichnet, dass** der Stab (8) und die Längsdrähte (4) einen kreisförmigen Querschnitt aufweisen und dass eine dritte (d8) Entfernung, die senkrecht zur Längsachse (A8) des Stabes zwischen dieser Längsachse und einer Mittelebene (P2) zwischen den Seiten (21, 23) des ersten Endes (22) gemessen wird, größer ist als eine vierte Entfernung (d4), die senkrecht zu einer Längsachse (A4R1) eines Seitenlängsdrahtes (4R1) des zweiten Endes (24) zwischen dieser Längsachse und dieser Mittelebene gemessen wird.

9. Rinne nach einem der vorhergehenden Ansprüche, **dadurch gekennzeichnet, dass** die Querdrähte (6) über Teilen (44) der den Boden (21) der Rinne (2) bildenden Längsdrähte und im Inneren von Teilen (44) der die Seiten (23, 25) der Rinne bildenden Längsdrähte außer an dem ersten Ende (22) angeordnet sind, an dem die Querdrähte unterhalb der Teile (42) der Längsdrähte, die den Boden (21) des ersten Endes bilden, und außerhalb von Teilen der Längsdrähte, die die Seiten (23, 25) des ersten Endes bilden, liegen.

10. Kabelkanal (1), mindestens eine erste Rinne (2) und eine zweite Rinne (2') nach einem der vorhergehenden Ansprüche umfassend, die miteinander durch die Aufnahme des ersten Endes (22) der ersten Rinne in dem zweiten Ende (24') der zweiten Rinne verbunden sind, wobei der oder jeder Stab (8) des ersten Endes (22) der ersten Rinne (2) sich gegen einen Seitenlängsdraht (4R1') des zweiten Endes (24') der zweiten Rinne (2') abstützt.

## Claims

1. Tray (2) for a cable route (1), comprising longitudinal wires (4) and transverse wires (6, 6A, 6B) welded into a lattice which defines a base (21) of the tray and also two sides (23, 25) extending on one and the other side of that base, that tray being provided, along a longitudinal axis (X2) of the tray (2), with a first end (22) and a second end (24) such that the first end can be engaged in and received in the second end (24') of an identical tray (2'), **characterised in that** the first end (22) bears, on the outside of each of its sides (23, 25), at least one elongate bar (8), a longitudinal axis (A8) of which is parallel to the longitudinal axis (X2) of the tray.

2. Tray according to claim 1, **characterised in that** the or each bar (8) is welded onto two adjacent transverse wires (6A) of the first end (22) at the level of a portion (63, 65) of those wires which constitutes a side (23, 25) of that first end.

3. Tray according to claim 2, **characterised in that** a first axial distance (D6A) between the two transverse wires (6A) onto which the bar (8) is welded is less than a second axial distance (D6B) between two transverse wires (6B) belonging to the second end (24).

4. Tray according to claim 3, **characterised in that** the length (L8) of the bar (8) is greater than the first axial distance (D6A) and less than the second axial distance (D6B).

5. Tray according to one of claims 2 to 4, **characterised in that** the bar (8) is arranged, relative to a base section (61) of a transverse wire (6a) of the first end (22) to which wire the bar is welded, at a first distance (H22) defined perpendicularly to the base (21) of the first end, said distance being such that, when the first end (22) is received in the second end (24') of an identical tray (2') with its two adjacent transverse wires (6A) abutting at least one longitudinal wire (4') of the base of the second end, the bar (8) abuts a side longitudinal wire (4R1') of the second end.

6. Tray according to claim 5, **characterised in that** the first distance (H22) is equal to or greater by less than 5 %, preferably by less than 3 %, than a second distance (H24) defined between the side longitudinal wire (4R1) of the second end (24) and a base longitudinal wire (4) of the second end (24).

7. Tray according to claim 6, **characterised in that** the first distance (H22) is defined between parts, which are remote from one another, of the bar (8) and of the base section (61) of the transverse wire (6A) of the first end (22); and **in that** the second distance (H24) is defined between parts, which face one another, of the side longitudinal wire (4R1) and of the base longitudinal wire (4) of the second end (24).

8. Tray according to one of the preceding claims, **characterised in that** the bar (8) and the longitudinal wires (4) are of circular cross-section; and **in that** a third distance (d8), measured perpendicularly to the longitudinal axis (A8) of the bar, between that longitudinal axis and a medial plane (P2) between the sides (21, 23) of the first end (22) is greater than a fourth distance (d4), measured perpendicularly to a longitudinal axis (A4R1) of a side longitudinal wire (4R1) of the second end (24), between that longitudinal axis and that medial plane.

9. Tray according to one of the preceding claims, **characterised in that** the transverse wires (6) are arranged above parts (44) of the longitudinal wires forming the base (21) of the tray (2) and inside parts (44) of the longitudinal wires forming the sides (23, 25) of the tray, except at the first end (22), where the transverse wires are arranged below parts (42) of the longitudinal wires forming the base (21) of the first end and outside parts (42) of the longitudinal wires forming the sides (23, 25) of the first end.

10. Cable route (1) comprising at least one first tray (2) and second tray (2') according to one of the preceding claims joined together by means of the first end (22) of the first tray being received in the second end (24') of the second tray, with the or each bar (8) of the first end (22) of the first tray (2) abutting a side longitudinal wire (4R1') of the second end (24') of the second tray (2').
